# EUROPÄISCHE PATENTSCHRIFT

(11) **EP 1 215 140 B1**
(45) Veröffentlichungstag und Bekanntmachung des Hinweises auf die Patenterteilung: **08.09.2004**
(21) Anmeldenummer: 01104239.7
(22) Anmeldetag: 22.02.2001
(51) Int. Cl.: B65G 13/10, B65G 47/54

(54) **Rolleneinheit**
Roller unit
Unité à rouleaux

(30) Priorität: 06.12.2000 DE 10060551
(43) Veröffentlichungstag der Anmeldung: 19.06.2002
(73) Patentinhaber: Trepel Airport Equipment GmbH, 97941 Tauberbischofsheim (DE)
(72) Erfinder: VEIT, Janik, D-97950 Gerchsheim (DE); Klaus, Pfeiffer, D-65205 Wiesbaden-Nordenstadt (DE)
(74) Vertreter: Richardt, Markus, Dipl.-Ing.

(56) Entgegenhaltungen:
- DE-A- 2 627 014
- FR-A- 2 168 203
- US-A- 3 363 735
- US-A- 3 552 541
- US-A- 3 878 927
- US-A- 5 028 149

## Beschreibung

Die Erfindung betrifft eine Rolleneinheit, insbesondere zum Fördern von Gegenständen mit flacher Unterseite, ferner ein Verfahren zur Herstellung eines Gehäuses für eine solche Rolleneinheit.

Eine Vorrichtung zum Fördern von Gegenständen mit flacher Unterseite, bei der eine Rolleneinheit Verwendung findet, ist aus der GB-A- 2 213 908 bekannt. Sie weist eine Vielzahl von Rolleneinheiten auf, die in parallelen Achsen gelagert sind. Die Rolleneinheiten sind antreibbar und ermöglichen aufgrund der Anordnung der frei drehbaren Rollen der jeweiligen Rolleneinheit, die unter einem Winkel zur Rotationsachse der Rolleneinheit angeordnet sind, je nach der Anordnung der Rollen zum transportierenden Gegenstand eine unterschiedliche Kraftübertragung der Rolleneinheit auf den zu fördernden Gegenstand. Im Zusammenwirken mit anderen Rolleneinheiten kann der Gegenstand somit in beliebigen Richtungen transportiert werden.

In der genannten Schrift sind Rolleneinheiten beschrieben, die ein als Gussteil ausgebildetes, einteiliges Gehäuse zur Aufnahme der Rollen aufweist, deren Drehachsen unter einem Winkel von etwa 30° zur zentralen Rotationsachse des Gehäuses positioniert sind. Die Gestaltung einer solchen Rolleneinheit ist technisch sehr aufwendig und in der Herstellung und Montage mit recht hohen Kosten verbunden. Dies gilt insbesondere für die Herstellung des Gehäusegussteils und die Montage der Rollen im Gehäuse.

Eine Vorrichtung zum Fördern von Gegenständen mit flacher Unterseite, bei der Rolleneinheiten Verwendung finden, ist des Weiteren aus der US-A-3,552,541 bekannt. Sie weist Rolleneinheiten auf, bei denen die jeweilige Rolle in einem durch Umformen gebildeten Gehäuseteil drehbar gelagert ist, wobei dieses Gehäuseteil schwenkbar in einem weiteren Gehäuseteil der Rolleneinheit gelagert ist, die in einer konzentrisch zur zentralen Rotationsachse des Gehäuses angeordneten Welle gelagert ist. Das Gehäuseteil, das der Aufnahme einer Rolle dient, ist mittels einer Stellvorrichtung schwenkbar. Die Vorrichtung weist ferner endseitige Rolleneinheiten auf, bei denen die Drehachsen der Rollen unter einem spitzen Winkel zur zentralen Rotationsachse des Gehäuses positioniert sind. Diese Rollen sind nicht verstellbar, sondern in einem einteiligen Gehäuse gehalten, das durch Umformen gebildete Flanschabschnitte zur Aufnahme der Rollen aufweist.

Aus der US-A-3,363,735 ist eine Rolleneinheit bekannt, bei der die Rotationsachsen der Rollen in einer gemeinsamen Ebene, die senkrecht zur zentralen Rotationsachse des Gehäuses angeordnet ist, liegt. Dort ist das Gehäuse einteilig und nicht durch Umformen ausgebildet.

Aus der FR-A-2,168,203 ist eine Rolleneinheit bekannt, die die Merkmale des Oberbegriffes der unabhängigen Patentansprüche 1 und 2 aufweist. Dort ist das Gehäuse mehrteilig ausgebildet, allenfalls die Gehäuseteile, die als Flanschabschnitte ausgebildet sind, und der Aufnahme der Rollen dienen, sind durch Umformen erzeugt.

Aufgabe der vorliegenden Erfindung ist es eine Rolleneinheit anzugeben, die baulich besonders einfach und damit kostengünstig hergestellt werden kann. Es ist ferner Aufgabe der Erfindung ein Verfahren zur Herstellung eines Gehäuses einer solchen Rolleneinheit anzugeben.

Gelöst wird die Aufgabe durch eine Rolleneinheit mit den Merkmalen des Patentanspruches 1 oder 2.

Wesentlich ist bei der erfindungsgemäßen Rolleneinheit, dass deren Gehäuse durch Umformen gebildet ist. Es kann somit auf die kostenaufwendige Verbindung eines Gussgehäuses verzichtet werden. Durch eine geschickte Gestaltung des Gehäuses können bei dessen Umformen Bereiche, insbesondere Flansche und Flanschabschnitte gebildet werden, in denen die Rollen gelagert werden. Es ist besonders einfach, das Ausgangsteil für das Gehäuse, bei dem es sich um ein Blech handelt, vor dem Umformen zu bearbeiten, indem beispielsweise Lagerlöcher ausgestanzt werden. Unmittelbar nach dem Umformen des Gehäuses können die Rollen montiert und das Gehäuse im Bereich der zentralen Rotationsachse drehfest mit einer Antriebswelle für das Gehäuse verbunden werden. Die Bearbeitung des Bleches kann aber durchaus nach dem Umformen erfolgen.

Besondere Bedeutung kommt der Anordnung der jeweiligen Rollen relativ zum Gehäuse zu. Diese sind in einer oder mehreren Ebenen, vorzugsweise einer Ebene senkrecht zur zentralen Rotationsachse angeordnet. Durch diese Anordnung, im rechten Winkel, läßt sich eine wesentliche Vereinfachung bei der Gestaltung der Rolleneinheit und der Montage der Rollen am Gehäuse erzielen. Die Gestaltung erlaubt ferner auf besonders einfache Art und Weise die Rollen so zu positionieren, dass die von der zentralen Rotationsachse des Gehäuses nach außen gerichteten gewölbten Bereiche der Rollen im wesentlichen, vorzugsweise präzise, auf einem Kreis liegen, der konzentrisch zur zentralen Rotationsachse des Gehäuses liegt. Über die Rolleneinheit angetrieben übertragen die Rollen dann maximale Förderkräfte auf den mit der flachen Unterseite versehenen Gegenstand, wenn dessen Förderrichtung senkrecht zur zentralen Rotationsachse des Gehäuses orientiert ist. Keine Reaktionskräfte werden von den Rollen auf den Gegenstand übertragen, wenn die Rolleneinheit stillsteht und der Gegenstand (unter Einwirkung einer externen Vorschubkraft) über die Rolleneinheit in Richtung deren zentralen Rotationsachse bewegt wird.

Eine besonders einfache Lagerung der jeweiligen Rolle im Gehäuse ergibt sich, wenn sie im Bereich zweier paralleler Stirnseiten im Gehäuse frei drehbar gelagert ist.

Unter dem Aspekt des Fertigungs- und Montageaufwandes wird es als besonders vorteilhaft angesehen, wenn das Gehäuse einteilig ausgebildet ist. Es ist insbesondere durch einen ebenen Plattenabschnitt, erste aus der Ebene des Plattenabschnitts gleichgerichtet abgewinkelte Flanschabschnitte sowie aus der Ebene der ersten Flanschabschnitte abgewinkelte zweite Flanschabschnitte gebildet, wobei die ersten und zweiten Flanschabschnitte der Aufnahme der Rollen dienen.

Eine zweiteilige Ausbildung des Gehäuses wird als durchaus zweckmäßig angesehen. In diesem Fall wird das Gehäuse vorteilhaft durch zwei identische Gehäuseteile gebildet. Das jeweilige Gehäuseteil weist einen ebenen Plattenabschnitt und aus der Ebene des Plattenabschnitts gleichgerichtet abgewinkelte Flansche zur Aufnahme der Rollen auf. Die Gehäuseteile werden, mit den Flanschen des jeweiligen Gehäuseteils aufeinander zugerichtet und bezüglich der zentralen Rotationsachse des jeweiligen Gehäuseteils fluchtend, ineinander gesteckt. Bei einer solchen Ausführungsform ist sicherzustellen, dass die beiden Gehäuseteile dauerhaft miteinander verbunden sind. Dies kann beispielsweise durch Verschweißen der Gehäuseteile in Teilbereichen erfolgen, wobei es ausreicht eine Heftschweißung vorzunehmen.

Es wird als besonders vorteilhaft angesehen, wenn jede Rolleneinheit nur vier Rollen aufweist. Im Gehäuse sind somit vier Rollen gelagert, wobei die Drehachsen benachbarter Rollen unter einem Winkel von 90° positioniert sind. Es reicht aus, wenn jede Rolle sich, bezogen auf ihre Drehachse, mit ihrer äußeren gekrümmten Fläche über einen Winkel erstreckt, der deutlich geringer ist als 90°, zum Beispiel einen Winkel von 60° bis 70°. Dies deshalb, weil die Achse zur Aufnahme der erfindungsgemäßen Rolleneinheit nicht nur diese, sondern auch weitere identisch gestaltete Rolleneinheiten aufnimmt, die drehversetzt zueinander angeordnet sind. Hierdurch wird gewährleistet, dass dann, wenn die eine Rolleneinheit mit ihren zwei oben liegenden Rollen den Gegenstand nicht tragen kann, weil unterhalb des Gegenstandes der Zwischenraum zwischen den Rollen positioniert ist, eine Rolle bei der benachbarten Rolleneinheit sich im wesentlichen im oberen Todpunkt befindet, so dass sie vollständig den Gegenstand stützt.

Weitere Merkmale der Erfindung sind die in Unteransprüchen, der Beschreibung der Figuren und den Figuren selbst dargestellt, wobei bemerkt wird, dass alle Einzelmerkmale und Kombinationen von Einzelmerkmalen erfindungswesentlich sind.

In den Figuren ist die Erfindung anhand zweier Ausführungsbeispiele dargestellt, ohne auf diese beschränkt zu sein. Es zeigt in vereinfachter räumlicher Darstellung, wobei in den Figuren zusätzliche Linien zur Verdeutlichung gekrümmter Flächen vorgesehen sind:
- Figur 1: eine Ausführungsform der Rolleneinheit unter Verwendung eines einteiligen Gehäuses,
- Figur 1A: eine Draufsicht der in Figur 1 gezeigten Rolleneinheit,
- Figur 2: das in Figur 1 gezeigte einteilige Gehäuse,
- Figur 3: eine zweite Ausführungsform der Rolleneinheit unter Verwendung eines zweiteiligen Gehäuses, wobei die Gehäuseteile identisch ausgebildet sind,
- Figur 4: eines der beiden bei der Ausführungsform nach Fig. 3 Verwendung findenden Gehäuseteil,
- Figur 5: die beiden bei der Ausführungsform nach der Fig. 3 Verwendung findenden Gehäuseteile, in ihrer inneinandergesteckten Position veranschaulicht.

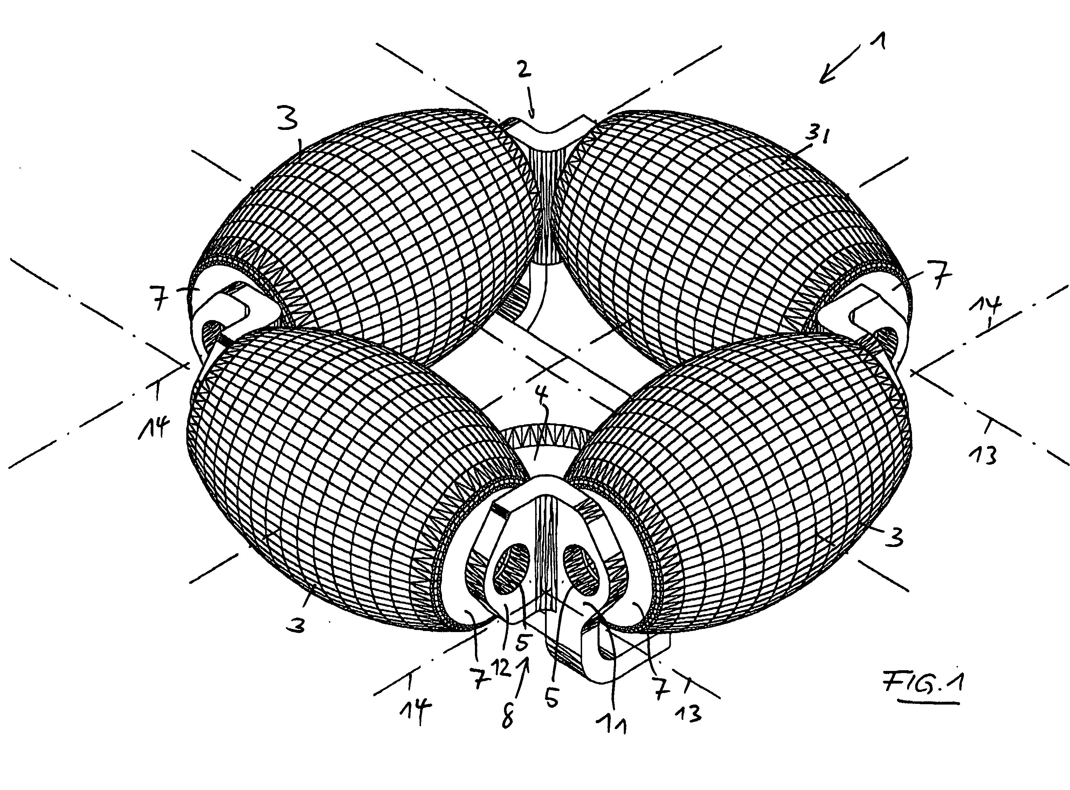

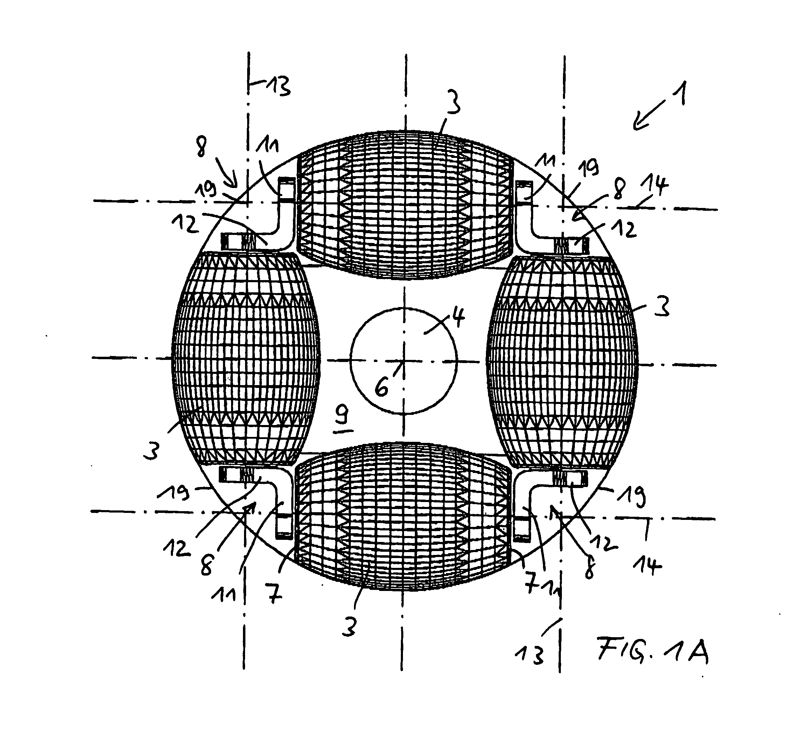

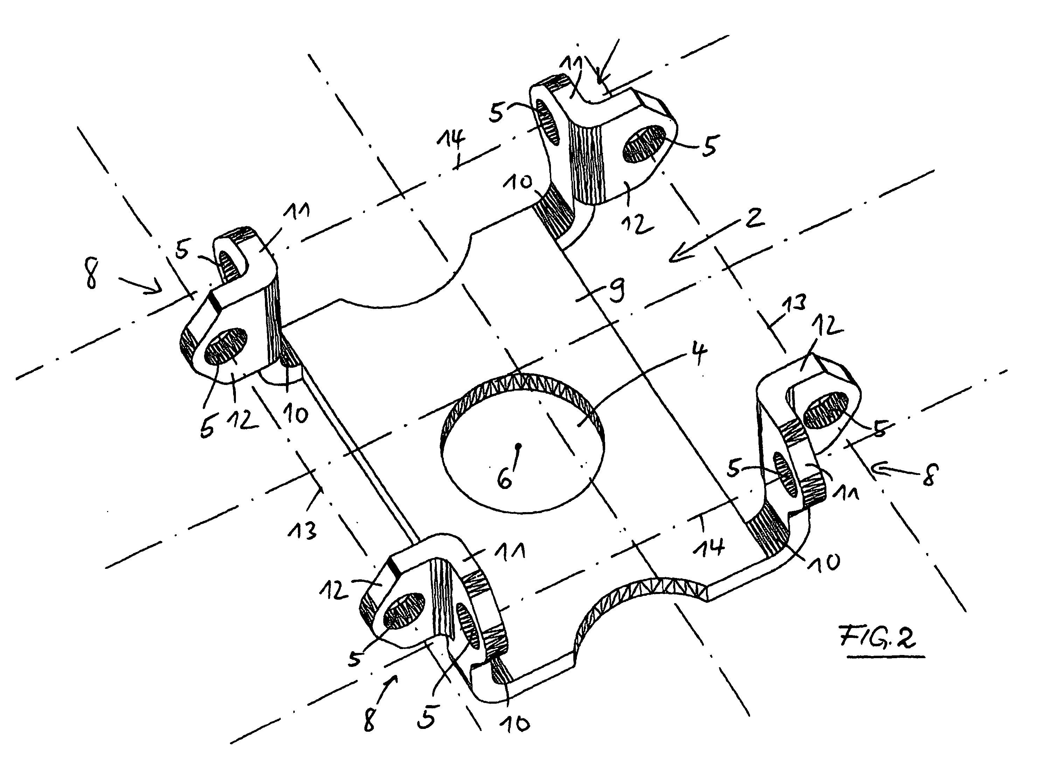

Wie in den Figuren 1 und 2 gezeigte erste Ausführungsform der Rolleneinheit 1 besteht aus einem Gehäuse 2 und vier von diesem aufgenommenen Rollen 3. Das Gehäuse 2 ist aus einer Blechplatte die eine relativ große Wandstärke aufweist durch Umformen der Blechplatte gebildet. Vor dem Umformen der Blechplatte sind aus dieser eine zentrale kreisförmige Öffnung 4 sowie acht kreisförmige Öffnungen 5 herausgestanzt worden. Die Achse 6 der Öffnung 4 stellt die zentrale Rotationsachse des Gehäuses dar. Die Öffnung 4 durchsetzt, nach der Montage der Rolleneinheit 1 eine nicht veranschaulichte Antriebswelle der Vorrichtung zum Fördern der Gegenstände mit flacher Unterseite, die drehfest mit dem Gehäuse 2 verbunden ist. Diese drehfeste Verbindung kann beispielsweise durch verschrauben der Welle mit dem Gehäuse 2 erfolgen, andererseits unter Verwendung einer Keilverbindung zwischen Welle und Gehäuse 2. Die kreisförmigen Öffnungen 5 dienen der Aufnahme der vier Rollen 3.

Gebildet wird das jeweilige Gehäuse 2, indem der flache Blechzuschnitt zunächst im Bereich der vier zu erzeugenden Flansche 8 gleichgerichtet um einen Winkel von etwa 90° aus der Ebene des Plattenabschnitts 9 gebogen wird. Die hierbei gebogenen Bereiche sind mit der Bezugsziffer 10 bezeichnet. Anschließend werden die Flansche 8 in sich gebogen. So entsteht, bezogen auf den jeweiligen Flansch 8, angrenzend an dessen mit dem Plattenabschnitt 9 verbundenen ersten Flanschabschnitt 11 ein zu diesem unter einem Winkel von 90° abgewinkelter zweiter Flanschabschnitt 12. Jeder Flanschabschnitt 11 bzw. 12 ist mit einer Öffnung 5 versehen, so dass sich zwei Paare paralleler Aufnahrneachsen 13 bzw. 14 für die vier Rollen 3 ergeben. Die Flanschabschnitte 11 und 12 sind, bezogen auf die zentrale Öffnung 4 und den Plattenabschnitt 9 jeweils nach außen gerichtet.

Die Rollen 3 sind in üblicher Art und Weise in den Flanschabschnitten 11 und 12 gelagert, beispielsweise indem die Lagerachsen der Rollen 3 in die Öffnungen 5 der Flanschabschnitte 11 und 12 eingepresst sind und die jeweilige Achse die Rolle 3 mit einem solchen Spiel durchsetzt, so dass sie bezüglich der Achse frei drehbar ist. Die Rollen können auch wälzgelagert sein.

Die Rollen 3 sind identisch ausgebildet, wobei deren Stirnseiten 7 senkrecht zur Drehachse 13 bzw. 14 der Rolle 3 orientiert sind. Die Längserstreckung der jeweiligen Rolle 3 ist so bemessen, dass sie mit geringem Spiel zwischen den beiden zugeordneten Flanschabschnitten 11 bzw. 12 gelagert ist. Die Aufnahmeachsen 13 und 14 der Rollen sind in einer Ebene positioniert, die parallel zur Ebene des Plattenabschnitts 9 verläuft. Die identisch ausgebildeten Rollen 3 sind jeweils rotationssymmetrisch und nach außen gewölbt ausgebildet, somit in Art von Tonnen. Die von der zentralen Rotationsachse 6 des Gehäuses 2 nach außen gerichteten gewölbten Bereiche der Rollen 3 liegen im wesentlichen auf einem in Figur 1A veranschaulichten Kreis 19, der konzentrisch zur zentralen Rotationsachse 6 des Gehäuses 2 positioniert ist. In der Einbaulage der Rolleneinheit 1 in der Fördervorrichtung verläuft die zentrale Rotationsachse 6 des Gehäuses 2 horizontal.

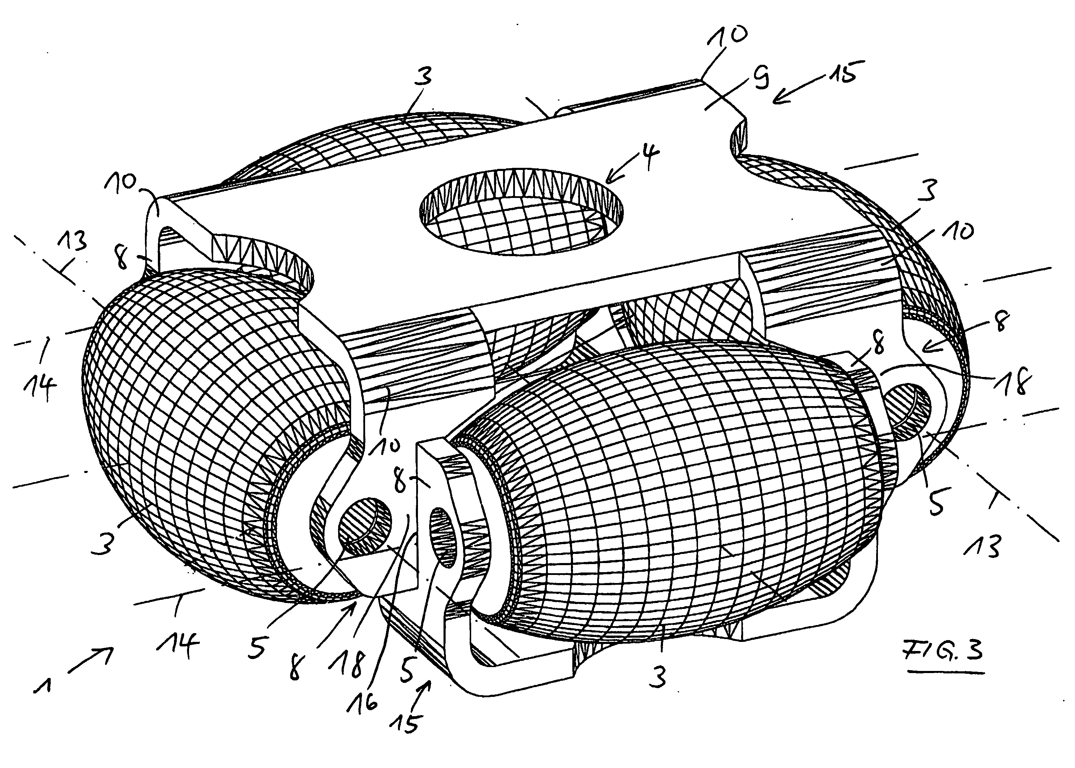

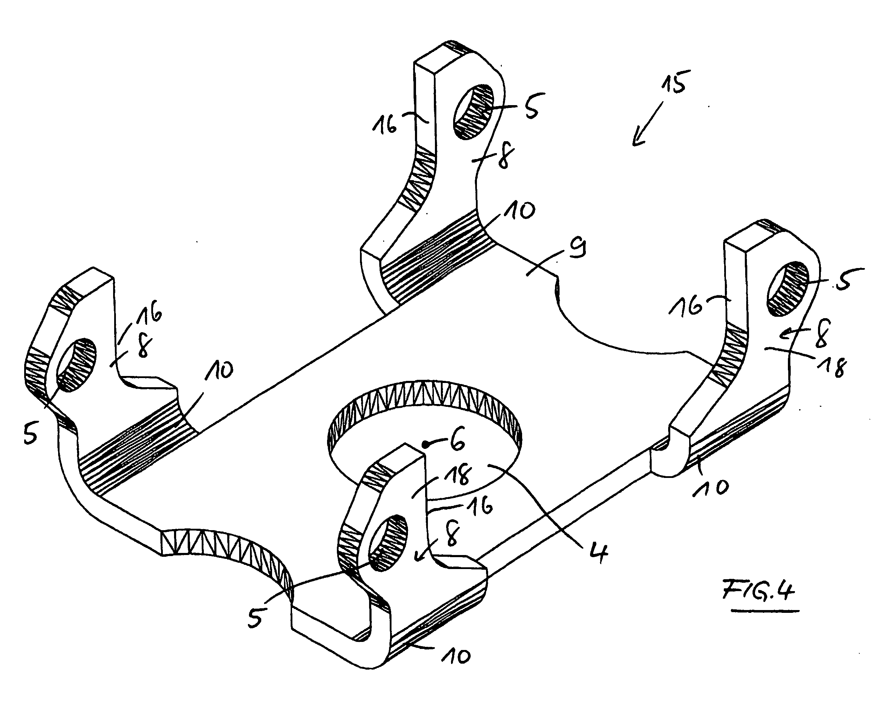

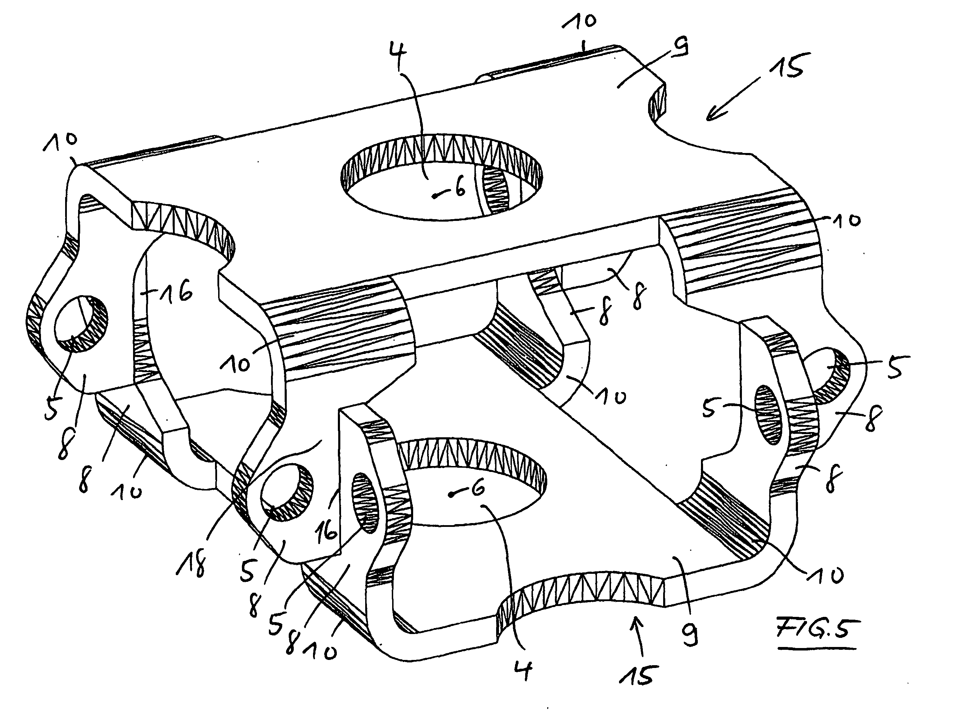

Das zweite Ausführungsbeispiel der erfindungsgemäßen Rolleneinheit 1 gemäß den Figuren 3 bis 5 unterscheidet sich von der vorbeschriebenen ersten Ausführungsform nur durch den Aufbau des Gehäuses 2. Mit der Ausführungsform nach den Figuren 1, 1A und 2, insbesondere bezüglich deren Funktion übereinstimmende Bauteile sind zur Ausführungsform nach den Figuren 3 bis 5 mit den selben Bezugsziffern bezeichnet. Es wird insofern auf die vorstehende Figurenbeschreibung verwiesen.

Bei der Ausführungsform nach den Figuren 3 bis 5 besteht das Gehäuse 2 aus den beiden identischen Gehäuseteilen 15. Das jeweilige Gehäuseteil 15 weist vier Flansche 8 auf. Gebildet werden diese, indem das ebene Ausgangsblech im Bereich der Flansche 8 entlang der Bereiche 10 gleichsinnig um 90° gebogen wird. Der lichte Abstand der Flansche 8, bezogen auf die Stirnfläche 16 des jeweiligen Flansches 8 ist so bemessen, dass die beiden identischen Gehäuseteile 15 in einer Position, in der die Gehäuseteile 15 bezüglich der zentralen Rotationsachse 6 des Gehäuses 2 um 90° zueinander gedreht sind, mit ihren Flanschen 8 aufeinander zugerichet zusammengesteckt werden können. Die Aussenflächen 18 der Flansche 8 des einen Gehäuseteiles 15 berühren dabei die Stirnflächen 16 der Flansche 8 des anderen Gehäuseteils 15. Durch Anbringen einer Heftschweißnaht zwischen den Flanschen 8 der beiden Gehäuseteile 15 kann auf einfache Art und Weise eine dauerhafte Verbindung der Gehäuseteile 15 hergestellt werden.

## Patentansprüche

1. Rolleneinheit (1), mit einem Gehäuse (2), das eine zentrale Rotationsachse (6) aufweist, mehreren im Gehäuse (2) frei drehbar gelagerten Rollen (3), die in einer oder mehreren Ebenen senkrecht zur zentralen Rotationsachse (6) des Gehäuses (2) angeordnet sind, wobei die jeweilige Rolle (3) rotationssymmetrisch und nach außen gewölbt ausgebildet ist, und die von der zentralen Rotationsachse (6) des Gehäuses (2) nach außen gerichteten gewölbten Bereiche der Rollen (3) im wesentlichen auf einem Kreis (19) liegen, der konzentrisch zur zentralen Rotationsachse (6) des Gehäuses (2) liegt, **gekennzeichnet durch** ein einteiliges, **durch** Umformen gebildetes Gehäuse (2) mit Flanschabschnitten (8, 11, 12), die der Aufnahme der Rollen (3) dienen.

2. Rolleneinheit (1), mit einem Gehäuse (2), das eine zentrale Rotationsachse (6) aufweist, mehreren im Gehäuse (2) frei drehbar gelagerten Rollen (3), die in einer oder mehreren Ebenen senkrecht zur zentralen Rotationsachse (6) des Gehäuses (2) angeordnet sind, wobei die jeweilige Rolle (3) rotationssymmetrisch und nach außen gewölbt ausgebildet ist, und die von der zentralen Rotationsachse (6) des Gehäuses (2) nach außen gerichteten gewölbten Bereiche der Rollen (3) im wesentlichen auf einem Kreis (19) liegen, der konzentrisch zur zentralen Rotationsachse (6) des Gehäuses (2) liegt, **gekennzeichnet durch** ein zweiteiliges Gehäuse mit Flanschabschnitten (8), die der Aufnahme von Rollen (3) dienen, wobei beide Gehäuseteile (15, 15) **durch** Umformen gebildet sind.

3. Rolleneinheit nach Anspruch 1 oder 2, **dadurch gekennzeichnet, dass** die jeweilige Rolle (3) im Bereich zweier paralleler Stirnseiten (7) im Gehäuse (2) bzw. Gehäuseteile (15) frei drehbar gelagert ist.

4. Rolleneinheit nach einem der Ansprüche 1 bis 3, **dadurch gekennzeichnet, dass** das Gehäuse (2) bzw. das Gehäuseteil (15) als Blechbauteil ausgebildet ist, dessen Flansche (8, 11, 12) durch Umformen erzeugt werden.

5. Rolleneinheit nach Anspruch 2, **dadurch gekennzeichnet, dass** das Gehäuse (2) durch zwei identische Gehäuseteile (15, 15) gebildet ist, wobei das jeweilige Gehäuseteil (15) einen ebenen Plattenabschnitt (9) und aus der Ebene des Plattenabschnitts (9) gleichgerichtet abgewinkelte Flansche (8) zur Aufnahme der Rollen (3) aufweist, wobei ferner die Gehäuseteile (15, 15), mit den Flanschen (8) des jeweiligen Gehäuseteils (15) aufeinander zugerichtet und bezüglich der zentralen Rotationsachse (6) des jeweiligen Gehäuseteils (15) fluchtend, ineinander gesteckt sind.

6. Rolleneinheit nach Anspruch 2 oder 5, **dadurch gekennzeichnet, dass** die beiden Gehäuseteile (15, 15), um einen Winkel von 90° zueinander gedreht, ineinander gesteckt sind.

7. Rolleneinheit nach Anspruch 1, **dadurch gekennzeichnet, dass** das Gehäuse (2) durch einen ebenen Plattenabschnitt (9), erste aus der Ebene des Plattenabschnittes (9) gleichgerichtet abgewinkelte Flanschabschnitte (11) sowie aus der Ebene der ersten Flanschabschnitte (11) abgewinkelte zweite Flanschabschnitte (12) gebildet ist, wobei die ersten und zweiten Flanschabschnitte (11, 12) der Aufnahme der Rollen (3) dienen.

8. Rolleneinheit nach einem der Ansprüche 1 bis 7, **dadurch gekennzeichnet, dass** im Gehäuse (2) vier Rollen (3) gelagert sind, wobei die Drehachsen (13, 14) benachbarter Rollen unter einem Winkel von 90° positioniert sind.

9. Rolleneinheit nach einem der Ansprüche 5 bis 8, **dadurch gekennzeichnet, dass** Flansche (8) bzw. erste Flanschabschnitte (11) um einen Winkel von etwa 90° aus der Ebenen des Plattenabschnitts (9) gebogen sind.

10. Rolleneinheit nach einem der Ansprüche 7 bis 9, **dadurch gekennzeichnet, dass** die zweiten Flanschabschnitte (12) um einen Winkel von etwa 90° aus der Ebene der ersten Flanschabschnitte (11) gebogen sind.

11. Rolleneinheit nach einem der Ansprüche 1 bis 10, **dadurch gekennzeichnet, dass** die Rollen (3) in einer einzigen Ebene senkrecht zur zentralen Rotationsachse (6) des Gehäuses (2) angeordnet sind.

12. Verfahren zur Herstellung eines Gehäuses (2) oder eines Gehäuseteils (15) für eine Rolleneinheit gemäß einem oder mehreren der Ansprüche 1 bis 11, **dadurch gekennzeichnet, dass** das Gehäuse (2) oder das Gehäuseteil (15) durch Umformen eines Blechteils erzeugt wird.

13. Verfahren nach Anspruch 12, **dadurch gekennzeichnet, dass** bei Verwendung zweier Gehäuseteile (15, 15) zur Bildung des Gehäuses die Gehäuseteile (15, 15) ineinandergesteckt werden.

14. Verfahren nach Anspruch 13, **dadurch gekennzeichnet, dass** die Gehäuseteile (15, 15) zueinander verdreht ineinandergesteckt werden.

15. Verfahren nach einem der Ansprüche 12 bis 14, **dadurch gekennzeichnet, dass** bei Verwendung zweier Gehäuseteile (15, 15) zur Bildung des Gehäuses die Gehäuseteile (15, 15) miteinander verschweißt werden.

## Claims

1. Roller unit (1), with a housing (2), that has a central rotational axis, and with several rollers (3), that are disposed in one or several planes vertical to the central axis of rotation (6) of the housing (2), and that are supported in the housing (2) such that they can rotate freely, whereby the given roller (3) is rotationally symmetrical and is arched outwards, the areas of the rollers (3) that arch outwards from the central axis of rotation (6) of the housing (2) essentially lying in a circle (19) that is concentric in relation to the central rotation axis (6) of the housing (2), **characterized by** a single-piece housing (2), with flange sections (8, 11, 12), formed by deformation to take up the rollers (3).

2. Roller unit (1), with a housing (2), that has a central rotational axis, and with several rollers (3), that are disposed in one or several planes vertical to the central axis of rotation (6) of the housing (2), and that are supported in the housing (2) such that they can rotate freely, whereby the given roller (3) is rotationally symmetrical and is arched outwards, the areas of the rollers (3) that arch outwards from the central axis of rotation (6) of the housing (2) essentially lying in a circle (19) that is concentric in relation to the central rotation axis (6) of the housing (2), **characterized by** a two-piece housing (2) with flange sections (8) that serve to take up rollers (3), whereby both housing parts (15, 15) are formed by deformation.

3. Roller unit in accordance with claims 1 or 2, **characterized in that** the given roller (3) is, in the area of two parallel end faces (7), supported in the housing (2) or housing parts (15) such that it can rotate freely.

4. Roller unit in accordance with one of claims 1 to 3, **characterized in that** the housing (2) or the housing section (15) is in the form of a sheet metal part, the flanges (8, 11, 12) of which are formed by deformation.

5. Roller unit in accordance with claim 2, **characterized in that** the housing (2) is formed by two identical housing sections (15, 15), whereby the given housing section (15) has a level plate section (9) and unidirected flange (8), angled off from the plane of the level section (9), to take up the rollers (3), whereby furthermore the housing sections (15, 15), with the flanges (8) of the given housing section (15), are set one above another and, in relation to the central rotation axis (6) of the given housing section (15), are set, aligned with each other, one in the other.

6. Roller unit in accordance with claims 2 or 5, **characterized in that** the two housing sections (15, 15) are set one in the other, rotated, in relation to each other, through an angle of 90°.

7. Roller unit in accordance with claim 1, **characterized in that** the housing (2) is formed by a flat plate section (9), first unidirectional flange sections (11) angled off from the plane of the plate section (9) and by second flange sections (12), angled-off from the plane of the first flange sections, whereby the first and second flange sections (11, 12) serve to take up the rollers (3).

8. Roller unit in accordance with one of claims 1 to 7, **characterized in that** four rollers (3) are supported in the housing (2), whereby the rotation axes (13, 14) of adjacent rollers are positioned at an angle of 90° to each other.

9. Roller unit in accordance with one of claims 5 to 8, **characterized in that** flanges (8) or first flange sections (11) are bent through an angle of approximately 90° from the plane of the plate section (9).

10. Roller unit in accordance with one of claims 7 to 9, **characterized in that** the second plate sections (12) is bent through an angle of approximately 90° in relation to the plane of the first flange sections (11).

11. Roller unit in accordance with one of claims 1 to 10, **characterized in that** the rollers (3) are disposed in a single plane running vertically in relation to the central rotation axis (6) of the housing (2).

12. Process for producing a housing (2) or a housing section (15) for a roller unit in accordance with one or more of claims 1 to 11, **characterized in that** the housing (2) or the housing section (15) is produced by shaping a sheet metal section.

13. Process in accordance with claim 12, **characterized in that**, where two housing sections (15, 15) are used to form the housing, the housing sections (15, 15) are fitted into each other.

14. Process in accordance with claim 13, **characterized in that** the housing sections (15, 15) are fitted into each other in a position in which they are rotated in relation to each other.

15. Process in accordance with claims 12 or 14, **characterized in that**, where two housing sections (15, 15) are used to form the housing, the housing sections (15, 15) are welded to each other.

## Revendications

1. Unité à rouleaux (1) comprenant un carter (2) présentant un axe de rotation central (6), plusieurs rouleaux (3) logés en rotation libre dans le carter (2), qui sont disposés dans un ou plusieurs plans perpendiculaires à l'axe de rotation central (6) du carter (2), chacun des rouleaux (3) présentant une forme à symétrie de rotation et bombée vers l'extérieur, et les zones des rouleaux (3) bombées, orientées depuis l'axe de rotation central (6) du carter (2) vers l'extérieur, se situant pour l'essentiel sur un cercle (19) s'étendant de manière concentrique à l'axe de rotation central (6) du carter (2),
**caractérisée par**
un carter (2) monobloc formé par transformation et présentant des sections de brides (8, 11, 12) servant au logement des rouleaux (3).

2. Unité à rouleaux (1) comprenant un carter (2) présentant un axe de rotation central (6), plusieurs rouleaux (3) logés en rotation libre dans le carter (2), qui sont disposés dans un ou plusieurs plans perpendiculaires à l'axe de rotation central (6) du carter (2), chacun des rouleaux (3) présentant une forme à symétrie de rotation et bombée vers l'extérieur, et les zones des rouleaux (3) bombées, orientées depuis l'axe de rotation central (6) du carter (2) vers l'extérieur, se situant pour l'essentiel sur un cercle (19) s'étendant de manière concentrique à l'axe de rotation central (6) du carter (2),
**caractérisée par**
un carter en deux éléments présentant des sections de brides (8) servant au logement des rouleaux (3), les deux éléments de carter (15, 15) étant formés par transformation.

3. Unité à rouleaux selon la revendication 1 ou 2,
**caractérisée en ce que**
chaque rouleau (3), dans la zone de deux faces frontales (7) parallèles, est logé en rotation libre dans le carter (2) ou l'élément de carter (15).

4. Unité à rouleaux selon l'une quelconque des revendications 1 à 3,
**caractérisée en ce que**
le carter (2) ou l'élément de carter (15) est un composant en tôle dont les brides (8, 11, 12) sont obtenues par transformation.

5. Unité à rouleaux selon la revendication 2,
**caractérisée en ce que**
le carter (2) est formé par deux éléments de carter (15, 15) identiques, dans laquelle chaque élément de carter (15) présente une section de plaque plan (9) et des brides (8) coudées dans le même sens par rapport au plan de la section de plaque (9) pour loger les rouleaux (3), dans laquelle les éléments de carter (15, 15) sont en outre emboîtés l'un dans l'autre de manière alignée par rapport à l'axe de rotation central (6) de l'élément de carter (15) respectif, les brides (8) de l'élément de carter (15) respectif étant orientées les unes par rapport aux autres.

6. Unité à rouleaux selon la revendication 2 ou 5,
**caractérisée en ce que**
les deux éléments de carter (15, 15) sont emboîtés l'un dans l'autre tournés l'un vers l'autre d'un angle de 90°.

7. Unité à rouleaux selon la revendication 1,
**caractérisée en ce que**
le carter (2) est formé par une section de plaque plan (9), par des premières sections de brides (11) coudées dans le même sens par rapport au plan de la section de plaque (9) ainsi que par des deuxièmes sections de brides (12) coudées par rapport au plan des premières sections de brides (11), les premières et deuxièmes sections de brides (11, 12) servant au logement des rouleaux (3).

8. Unité à rouleaux selon l'une quelconque des revendications 1 à 7,
**caractérisée en ce que**
quatre rouleaux (3) sont logés dans le carter (2), les axes de rotation (13, 14) de rouleaux voisins étant positionnés à un angle de 90°.

9. Unité à rouleaux selon l'une quelconque des revendications 5 à 8,
**caractérisée en ce que**
des brides (8) ou des premières sections de brides (11) sont coudées d'un angle de 90° environ par rapport aux plans de la section de plaque (9).

10. Unité à rouleaux selon l'une quelconque des revendications 7 à 9,
**caractérisée en ce que**
les deuxièmes sections de brides (12) sont coudées d'un angle de 90° environ par rapport au plan des premières sections de brides (11).

11. Unité à rouleaux selon l'une quelconque des revendications 1 à 10.
**caractérisée en ce que**
les rouleaux (3) sont disposés dans un seul plan perpendiculaire à l'axe de rotation central (6) du carter (2).

12. Procédé de fabrication d'un carter (2) ou d'un élément de carter (15) pour une unité à rouleaux selon l'une ou plusieurs des revendications 1 à 11,
**caractérisé en ce que**
le carter (2) ou l'élément de carter (15) est obtenu par transformation d'une pièce en tôle.

13. Procédé selon la revendication 12,
caractérisé en qu'
en utilisant deux éléments de carter (15, 15) pour former le carter, les éléments de carter (15, 15) sont emboîtés l'un dans l'autre.

14. Procédé selon la revendication 13,
**caractérisé en ce que**
les éléments de carter (15, 15) sont emboîtés l'un dans l'autre en étant tournés l'un par rapport à l'autre.

15. Procédé selon l'une quelconque des revendications 12 à 14,
**caractérisé en ce qu'**
en utilisant deux éléments de carter (15, 15) pour former le carter, les éléments de carter (15, 15) sont soudés l'un à l'autre.
